# EUROPEAN PATENT SPECIFICATION

(11) **EP 3 218 262 B1**
(45) Date of publication and mention of the grant of the patent: **14.06.2023**
(21) Application number: 15858801.2
(22) Date of filing: 10.11.2015
(51) Int. Cl.: B64C 27/08, B64C 27/10, B64C 39/02

(54) **UNMANNED AERIAL VEHICLE CONFIGURATION FOR EXTENDED FLIGHT**
KONFIGURATION FÜR VERLÄNGERTEN FLUG EINES UNBEMANNTEN LUFTFAHRZEUGS
CONFIGURATION DE VÉHICULE AÉRIEN SANS PILOTE POUR VOL PROLONGÉ

(30) Priority: 11.11.2014 US 201414538570; 24.11.2014 US 201462083879 P; 01.12.2014 US 201414557403
(43) Date of publication of application: 20.09.2017
(73) Proprietor: Amazon Technologies, Inc., Seattle, WA 98108-1226 (US)
(72) Inventor: WELSH, Ricky Dean, Seattle, WA 98109-5210 (US); BUCHMUELLER, Daniel, Seattle, WA 98109-5210 (US); HENSEL, Fabian, Seattle, WA 98109-5210 (US); KIMCHI, Gur, Seattle, WA 98109-5210 (US); LEGRAND, Louis LeRoi III, Seattle, WA 98109-5210 (US); PORTER, Brandon William, Seattle, WA 98109-5210 (US); ROBB, Walker Chamberlain, Seattle, WA 98109-5210 (US); TRAUBE, Joshua White, Seattle, WA 98109-5210 (US)
(74) Representative: D Young & Co LLP
(86) International application number: PCT/US2015/060023
(87) International publication number: WO 2016/077391

(56) References cited:
- EP-A1- 3 161 574
- EP-A1- 3 265 382
- WO-A1-2013/123944
- WO-A1-2015/135951
- WO-A1-2015/135951
- WO-A2-2014/080388
- WO-A2-2014/106814
- CN-U- 201 932 359
- DE-A1-102013 104 447
- GB-A- 2 486 448
- GB-A- 2 502 250
- US-A- 5 890 441
- US-A1- 2014 032 034
- US-A1- 2014 099 853
- US-A1- 2014 103 158
- US-B2- 8 322 648

## Description

### FIELD

The invention relates to unmanned aerial vehicles (UAVs).

### BACKGROUND

Multi-propeller aerial vehicles (e.g., quad-copters, octo-copters) are becoming more common. All such vehicles require a body configuration that will support the separation of the multiple propellers, the control components, the power supply (e.g., battery), etc.

EP3161574 (A1) describes an automated aerial vehicle that includes one or more object detection elements configured to detect the presence of objects and an avoidance determining element configured to cause the automated aerial vehicle to automatically determine and execute an avoidance maneuver to avoid the objects.

EP3265382 (A1) describes a configuration of an unmanned aerial vehicle (UAV) that includes a substantially polygonal perimeter frame and a central frame.

DE102013104447discloses self-climbing landing gear with flight characteristics, which automatically reaches a suitable surface for cleaning purposes, repair purposes and monitoring purposes.

WO2014106814 (A2) discloses a reporter drone to approach a specific speaker, and register sounds from inside a narrow location where the drone's body or a reporter cannot approach, or cannot get in.

US2014099853 (A1) discloses hovering remote-control flying craft having a molded frame assembly and including a plurality of arms extending from a center body with an electric motor and corresponding propeller on each arm.

CN201932359 (U) discloses a distributive power multi-rotor vertical take-off and landing aircraft.

US2014032034 (A1) discloses a delivery system having unmanned aerial delivery vehicles and a logistics network for control and monitoring.

WO2015135951 (A1) discloses a rotating-wing drone, made of an expanded resin having a density of from 20 to 100 g/1, obtained through expansion of pre-expanded granules inside a mold.

### BRIEF DESCRIPTION OF THE DRAWINGS

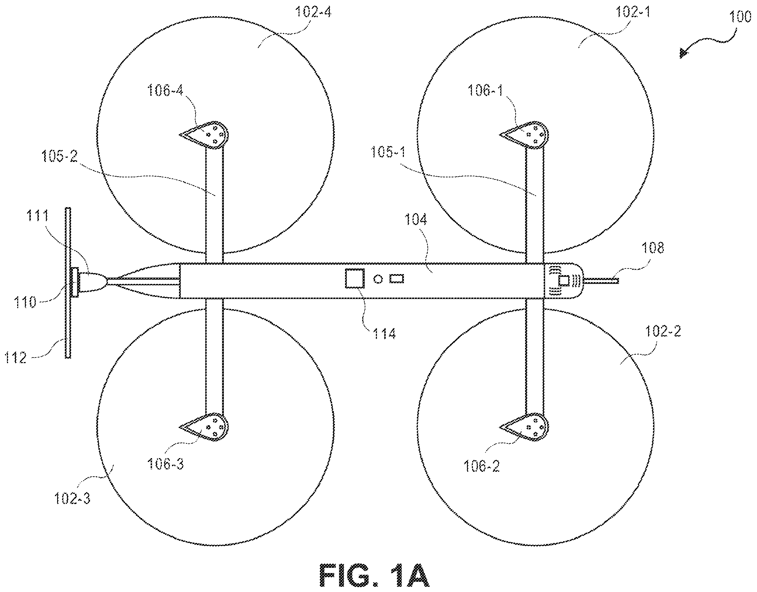

The detailed description is set forth with reference to the accompanying figures. Of these figures, the UAV shown in Figures 1A, 1B, 2, 5, 10, 11 and 12 does not have all of the features of claim 1, but is nevertheless useful for understanding the invention. The reference to an implementation used herein is understood as the reference to an illustrative example, not necessarily falling within the scope of the appended claims - which have to be used to assess the scope of the invention.
FIG. 1A depicts a block diagram of a top-down view of an unmanned aerial vehicle, according to an implementation.
FIG. 1B depicts a block diagram of a top-down view of an unmanned aerial vehicle, according to an implementation.
FIG. 2 depicts another view of an unmanned aerial vehicle, according to an implementation.
FIG. 3 depicts a view of a power supply container of an unmanned aerial vehicle coupled to a frame of the unmanned aerial vehicle, according to an implementation.
FIG. 4 depicts a view of a power supply container of the unmanned aerial vehicle, according to an implementation.
FIG. 5 depicts a bottom view of a frame of the unmanned aerial vehicle, according to an implementation.
FIG. 6 depicts a lifting motor and lifting motor housing of the unmanned aerial vehicle, according to an implementation.
FIG. 7 depicts a lifting motor housing of the unmanned aerial vehicle, according to an implementation.
FIG. 8 is a block diagram of an illustrative implementation of a server system that may be used with various implementations.
FIG. 9 is a block diagram of a protection circuit, according to an implementation.
FIG. 10 depicts a view of an unmanned aerial vehicle configuration, according to an implementation.
FIG. 11 depicts a view of an unmanned aerial vehicle frame, according to an implementation.
FIG. 12 depicts another view of an unmanned aerial vehicle frame, according to an implementation.
FIG. 13 depicts a view of another unmanned aerial vehicle configuration, according to an embodiment of the invention.
FIG. 14 depicts a view of another unmanned aerial vehicle frame, onfigured to be used within the context of the invention.
FIG. 15 depicts a view of another unmanned aerial vehicle configuration, according to an embodiment of the invention.
FIG. 16 depicts another view of an unmanned aerial vehicle configuration, according to embodiment of the invention.

While implementations are described herein by way of example, those skilled in the art will recognize that the implementations are not limited to the examples or drawings described. It should be understood that the drawings and detailed description thereto are not intended to limit implementations to the particular form disclosed but, on the contrary, the intention is to cover all modifications and alternatives falling within the scope as defined by the appended claims. The headings used herein are for organizational purposes only and are not meant to be used to limit the scope of the description or the claims. As used throughout this application, the word "may" is used in a permissive sense (i.e., meaning having the potential to), rather than the mandatory sense (i.e., meaning must). Similarly, the words "include," "including," and "includes" mean including, but not limited to. Additionally, as used herein, the term "coupled" may refer to two or more components connected together, whether that connection is permanent (*e.g.,* welded) or temporary (*e.g.,* bolted), direct or indirect (*i.e.,* through an intermediary), mechanical, chemical, optical, or electrical. Furthermore, as used herein, "horizontal" flight refers to flight traveling in a direction substantially parallel to the ground (*i.e.,* sea level), and that "vertical" flight refers to flight traveling substantially radially outward from the earth's center. It should be understood by those having ordinary skill that trajectories may include components of both "horizontal" and "vertical" flight vectors. The invention is defined in claim 1.

### DETAILED DESCRIPTION

This disclosure describes a configuration of an unmanned aerial vehicle ("UAV") that will facilitate extended flight duration. The UAV may have any number of lifting motors. For example, the UAV may include four lifting motors (also known as a quad-copter), eight lifting motors (also known as an octo-copter), etc. Likewise, to improve the efficiency of horizontal flight, the UAV may also include a pushing motor and propeller assembly that is oriented at approximately ninety degrees to one or more of the lifting motors, the frame of the UAV and/or the motor arm of the UAV. When the UAV is moving horizontally, the pushing motor may be engaged and the pushing propeller will aid in the horizontal propulsion of the UAV. In some implementations, the rotational speed of the lifting motors may be reduced when the pushing motor is engaged, thereby improving efficiency and reducing power consumption of the UAV. Likewise, in some implementations, the UAV may include a wing to aid in the vertical lift of the UAV while the UAV is moving horizontally.

To further improve the efficiency of the UAV, in some implementations, the frame, motor arms, fuselage, wing, propellers, and/or other components of the UAV may be formed of one or more lightweight materials, such as carbon fiber, graphite, machined aluminum, titanium, fiberglass, etc. As discussed below, in some implementations, the frame may be formed of a thermally conductive material to enable use of the frame for heat dissipation.

Regardless of material, each of the motor arms, motor housing, and/or fuselage may be hollow, thereby reducing weight and providing a cavity through which one or more wires and/or cables may be passed and/or in which other components may be housed. For example, wires that connect the motors (e.g., lifting motors, pushing motors) to components located in or around the frame (e.g., electronic speed control ("ESC")) may be passed through the inner portion of one or more of the motor housings and motor arms.

In some implementations, the UAV assembly may be configured so that the wires passing through the motor housings and/or motor arms have multiple junctions to enable easy disassembly and/or part replacements. For example, the motor wires may be configured with multiple separable junctions. For example, the motor wires may extend from the motor and have a separable junction at or near the end of the motor arm near where the motor is mounted, rather than having only a single junction where the motor wires connect to the ESC. By having a separable junction for the motor wires near the motor, the motor can be easily removed and replaced without having to disassemble any other components (e.g., fuselage, motor arms) of the UAV.

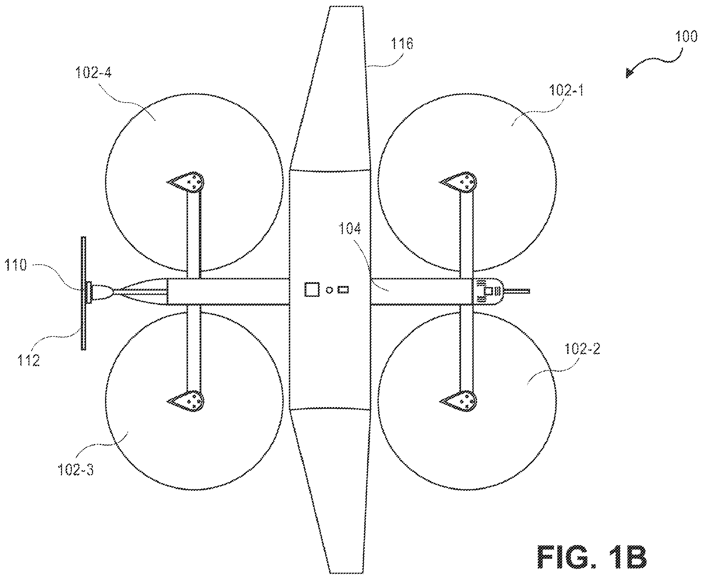

In some implementations, as discussed below, the fuselage may be aerodynamically designed to mount on an underneath or bottom side of the frame and be configured to contain components and power supplies of the UAV. For example, the fuselage may be formed from carbon fiber and mount to ridges or grooves in the frame, as illustrated and discussed below with respect to FIG. 1B.

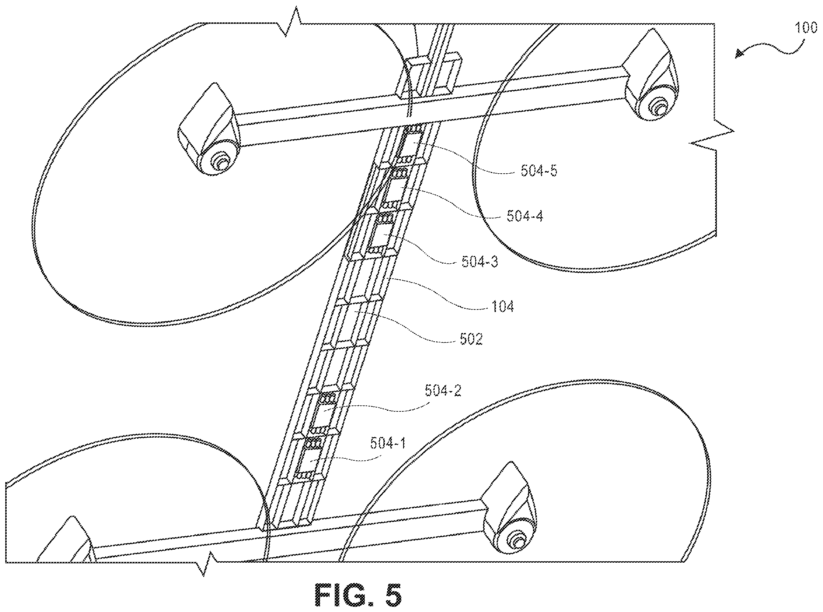

FIG. 1A illustrates a block diagram of a top-down view of a UAV 100, according to an implementation. As illustrated, the UAV 100 includes a frame 104. The frame 104 or body of the UAV 100 may be formed of any suitable material, such as graphite, carbon fiber, aluminum, etc., or any combination thereof. In this example, the frame 104 of the UAV 100 is formed of machined aluminum in a rectangular shape. As discussed in further detail below with respect to FIG. 5, the underneath or bottom side of the frame 104 may be machined into a grid or hash pattern to reduce the weight of the frame, provide support, and provide locations for mounting other components of the UAV 100.

Mounted to the frame are two motor arms 105-1, 105-2. In this example, the motor arms 105-1, 105-2 are approximately the same length, are arranged substantially parallel to one another and perpendicular to the frame 104. In other implementations, the motor arms 105 may be of different lengths (e.g., the front motor arm 105-1 may be shorter than the rear motor arm 105-2 and/or arranged at different locations on the UAV 100.

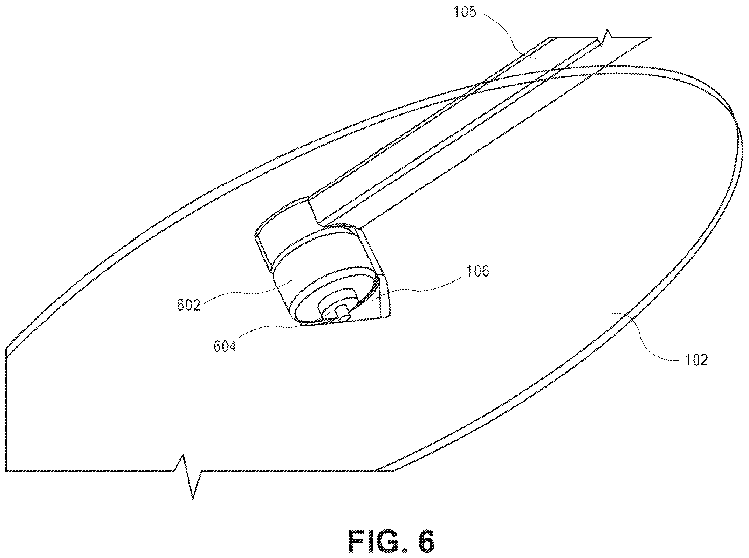

Mounted to each end of the motor arms 105 are lifting motor housings 106-1, 106-2, 106-3, 106-4. The lifting motor housings 106 may be formed of any material, such as carbon fiber, aluminum, graphite, etc. In this example, the lifting motor housings 106 are aerodynamically shaped to reduce friction of air flow during horizontal flight of the UAV. The lifting motor housings 106 are discussed further below with respect to FIGs. 6 - 7.

Mounted inside each lifting motor housing 106 is a lifting motor 602 (not shown in FIG. 1A, but illustrated and discussed in FIG. 6). In one implementation, the lifting motors are mounted so that propeller shaft of the lifting motor that mounts to the propeller 102 is facing downward with respect to the UAV 100. In other implementations, the lifting motors may be mounted with the propeller shaft facing upwards with respect to the UAV 100. In still other implementations, one or more of the lifting motors may be mounted with the propeller shaft facing downward and one or more of the lifting motors may be mounted with the propeller shaft facing upward. In other implementations, the lifting motors may be mounted at other angles with respect to the frame of the UAV 100. The lifting motors may be any form of motor capable of generating enough rotational speed with the propellers to lift the UAV 100 and any engaged payload, thereby enabling aerial transport of the payload. For example, the lifting motors may each be a FX-4006-13 740kv multi-rotor motor, or a Tiger U-11 motor.

Mounted to each lifting motor is a lifting propeller 102-1, 102-2, 102-3, 102-4. The lifting propellers 102 may be any form of propeller (e.g., graphite, carbon fiber) and of a size sufficient to lift the UAV 100 and any payload engaged by the UAV 100 so that the UAV 100 can navigate through the air, for example, to deliver a payload to a delivery location. For example, the lifting propellers 102 may each be carbon fiber propellers having a dimension or diameter of twenty-nine inches. While the illustration of FIG. 1 shows the lifting propellers 102 all of a same size, in some implementations, one or more of the lifting propellers 102 may be different sizes and/or dimensions. Likewise, while this example includes four lifting propellers, in other implementations, more or fewer propellers may be utilized as lifting propellers. Likewise, in some implementations, the propellers may be positioned at different locations on the UAV 100. In addition, alternative methods of propulsion may be utilized as "motors" in implementations described herein. For example, fans, jets, turbojets, turbo fans, jet engines, internal combustion engines, and the like may be used (either with propellers or other devices) to provide thrust for the UAV.

Mounted to a first end, or front end, of the frame 104 of the UAV 100 is one or more antennas 108. The antennas 108 may be used to transmit and/or receive wireless communications. For example, the antennas 108 may be utilized for Wi-Fi, satellite, near field communication ("NFC"), cellular communication, or any other form of wireless communication. Other components, such as cameras, time of flight sensors, distance determining elements, gimbals, etc. may likewise be mounted to the front of the frame 104 of the UAV 100.

Mounted to a second end, or rear end, of the frame 104 of the UAV 100 is a pushing motor housing 111, a pushing motor 110 and a pushing propeller 112. While the term "pushing motor" is used, those having ordinary skill will appreciate that the position of motor 110 and antennas 108 may be reversed and reconfigured such that pushing motor 110 actually "pulls" the UAV 100 in a horizontal direction rather than pushes it. As such, as used herein, the term pushing motor shall be construed to include implementations configured for either "push" horizontal thrust or "pull" horizontal thrust. The pushing motor housing 111 may be aerodynamically shaped and configured to encase the pushing motor 110. The pushing motor 110 and the pushing propeller 112 may be the same or different than the lifting motors and lifting propellers 102. For example, in some implementations, the pushing motor 110 may be a Tiger U-8 motor and the pushing propeller 112 may have a dimension of eighteen inches. In some implementations, the pushing propeller may have a smaller dimension than the lifting propellers.

The pushing motor 110 and pushing propeller 112 may be oriented at approximately ninety degrees with respect to the frame 104 of the UAV 100 and utilized to increase the efficiency of flight that includes a horizontal component. For example, when the UAV 100 is traveling in a direction that includes a horizontal component, the pushing motor 110 may be engaged to provide horizontal thrust force via the pushing propeller to propel the UAV 100 horizontally. As a result, the speed and power utilized by the lifting motors may be reduced. Alternatively, in selected implementations, the pushing motor 110 may be oriented at an angle greater or less than ninety degrees with respect to frame 104 to provide a combination of pushing and lifting thrust.

One or more navigation components 114, such as a global positioning receiver/transmitter, may also be mounted to the top of the frame 104.

FIG. 1B depicts another block diagram of a top-down view of a UAV 100, according to an implementation. In the example illustrated in FIG. 1B, the UAV 100 includes a wing 116 coupled to the frame of the UAV 100. The wing may be formed of any suitable material such as, but not limited to, carbon fiber, aluminum, fabric, plastic, fiberglass, etc. The wing 116 may be coupled to the top of the frame 104 and positioned between the lifting motors 102. In other implementations, the wing 116 may be position above the lifting motors and/or lifting propellers.

The wing is designed to have an airfoil shape to provide lift to the UAV 100 as the UAV 100 moves horizontally. In some implementations, utilizing the pushing motor 110 and pushing propeller 112 in conjunction with the wing 116, when the UAV 100 is moving in a direction that includes a horizontal component, the rotational speed of the lifting motors and lifting propellers 102 may be reduced or eliminated as the wing 116 may provide lift and keep the UAV 100 airborne when thrust in a horizontal direction by the pushing motor 110 and pushing propeller 112 is applied. In implementations where the wing includes flaps and/or ailerons, the pitch, yaw and roll of the UAV 100 may be controlled using the flaps and/or ailerons alone or in combination with the lifting motors and lifting propellers 102. If the wing does not include flaps and/or ailerons, the lifting motors and lifting propellers 102 may be utilized to control the pitch, yaw, and roll of the UAV 100 during flight. In some implementations, the wing 116 may be configured to rotate or pivot about the frame 104 of the UAV to reduce drag when the UAV 100 is moving a direction that includes a vertical component.

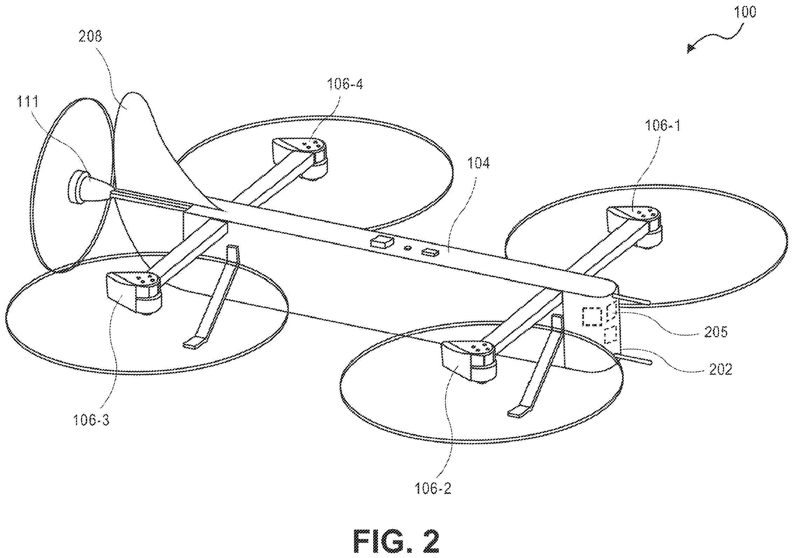

FIG. 2 depicts another view of a UAV 100, according to an implementation. As illustrated in FIG. 2, the UAV 100 may be configured for aerodynamics. For example, a fuselage 202 may be included on the UAV 100, mounted to the frame 104 and extending downward and around many of the components of the UAV 100. The fuselage 202 may be made of any suitable material(s) such as graphite, carbon fiber, aluminum, fiberglass, etc.

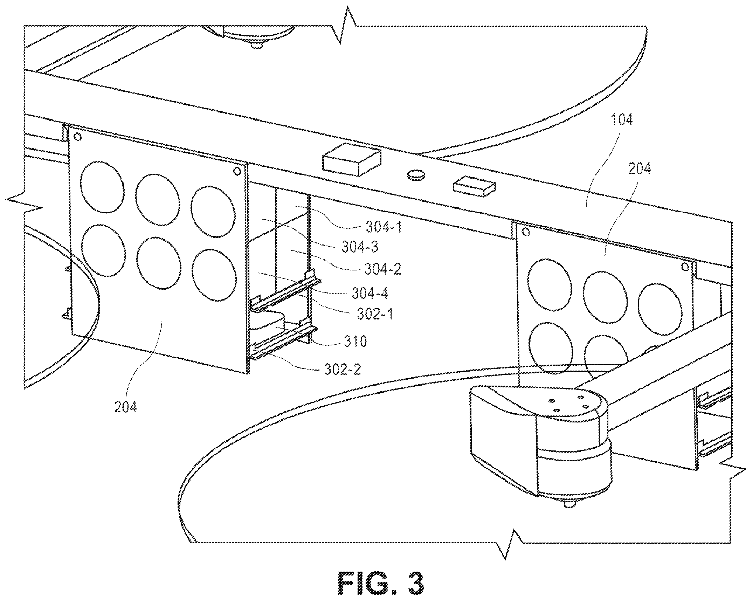

The fuselage 202 may encompass one or more power supply containers 204 (FIG. 3), a payload (not shown), and/or the components of the UAV control system 205. The fuselage 202 may be coupled to the sides of the frame using one or more attachment mechanisms, such as screws, rivets, latches, quarter-turn fasteners, etc. In some implementations, the attachment mechanisms may be configured to enable easy removal and reattachment of the fuselage to facilitate power supply and/or power supply container replacement and maintenance to the UAV control system.

The payload, such as a package or item to be delivered to a user, may be configured to fit within the fuselage 202, such as between two power supply containers, and be removably coupled to the frame 104 of the UAV. In other implementations, the payload may form a portion of the fuselage. For example, the fuselage may include a gap or opening and when the payload is coupled to the frame 104 of the UAV 100 the sides of the payload may complete the fuselage 202.

As discussed above, and further illustrated in FIG. 2, the motor housings 106-1, 106-2, 106-3, 106-4, 111 have an aerodynamic shape to improve the overall aerodynamics of the UAV when the UAV is traveling horizontally. For example, the motor housings 106-1, 106-2, 106-3, 106-4 for the lifting motors may be tapered toward the rear of the UAV 100. Likewise, the motor housing 111 may be cone shaped with the narrow end of the cone directed toward the nose of the UAV 100. In some implementations, the motor arms 105 may also have an aerodynamic form. For example, the motor arms 105 may be tapered toward the rear (e.g., "teardrop" shaped) of the UAV 100 and/or may have an airfoil design to provide additional lift to the UAV 100 when the UAV 100 moves horizontally.

The UAV may also include a vertical stabilizer 208 extending upward from the top of the frame 104. The vertical stabilizer 208 may also include a rudder (not shown) that can be controlled by the UAV control system to adjust the yaw of the UAV. Likewise, in some implementations, the UAV 100 may also include horizontal stabilizers (not shown) which may include elevators controlled by the UAV control system to adjust the pitch of the UAV 100.

FIG. 3 depicts a view of the UAV 100 with the fuselage 202 removed, exposing two power supply containers 204 of the UAV 100 coupled to the frame 104 of the UAV 100, according to an implementation. As illustrated, the frame 104 may include one or more grooves or indents into which the power supply containers 204 may be positioned and attached to the frame 104. In some implementations, the grooves of the frame 104 may be angled and designed to provide a friction fit with the power supply containers. In other implementations, the power supply containers 204 may be removably mounted to the frame 104 using screws, rivets, quarter-turn fasteners, or other attachment mechanisms. In still other implementations, the power supply containers 204 may be permanently mounted to the frame 104 and/or formed as part of the frame 104.

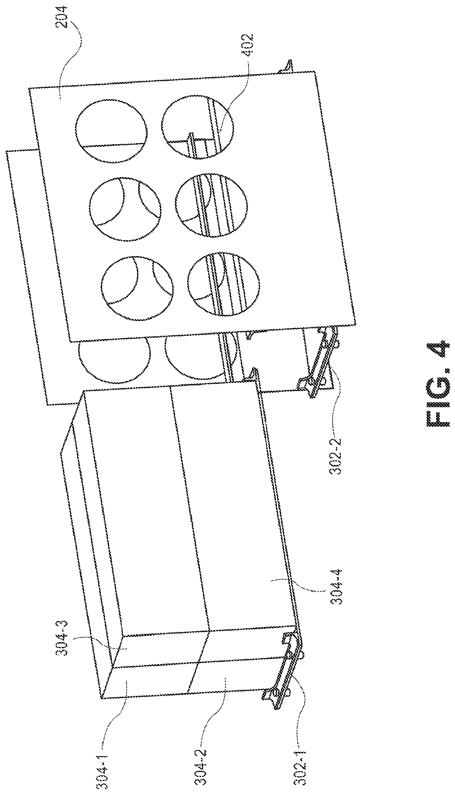

The power supply containers 204 may include one or more shelves 302 that may be positioned within the power supply container 204. Referring to FIG. 4, the shelves 302-1, 302-3 may be removable from the power supply containers 204. For example, the shelves 302 may be designed to mount or fit in the power supply container 204 on rails 402. The rails 402 and shelves 302 may be movable horizontally and/or vertically to facilitate placement of different size power supplies and/or other components. For example, as illustrated in FIGs. 3 - 4, the shelf 302-1 is supporting four power supplies 304-1, 304-2, 304-3, 304-4. The power supplies 304 may be in the form of battery power, solar power, gas power, super capacitor, fuel cell, alternative power generation source, or a combination thereof. For example, the power supplies 304 may each be a 6000mAh lithium-ion polymer battery, polymer lithium ion (Li-poly, Li-Pol, LiPo, LIP, PLI or Lip) battery, etc.

The power supplies 304 may be individually removed and/or the entire shelf 302 may be removed with all of the supporting power supplies, as illustrated in FIG. 4. Likewise, the power supply containers 204 may include one or more openings (e.g., holes) on the sides of the power supply container to facilitate heat dissipation from the supported power supplies and/or other components.

The shelves of the power supply containers 204 may also support other components. For example, one or more components of the UAV control system 310 may be included on the shelves 302 of the power supply containers 204, as illustrated in FIG. 3. Likewise, a power distribution unit to which the power supplies 304 are connected may be supported by one of the shelves of the power supply container. For example, the power distribution unit may be mounted to a shelf of the power supply container 204 and all of the power supplies may be coupled to the power distribution unit. The power distribution unit may then be coupled to the UAV control system 310 and/or other components of the UAV to provide power. In some implementations, the connection between the power distribution unit and the UAV control system may be a single coupling, such as a magnetic coupling, male/female connection, etc. to facilitate complete exchange of the power supply container 204.

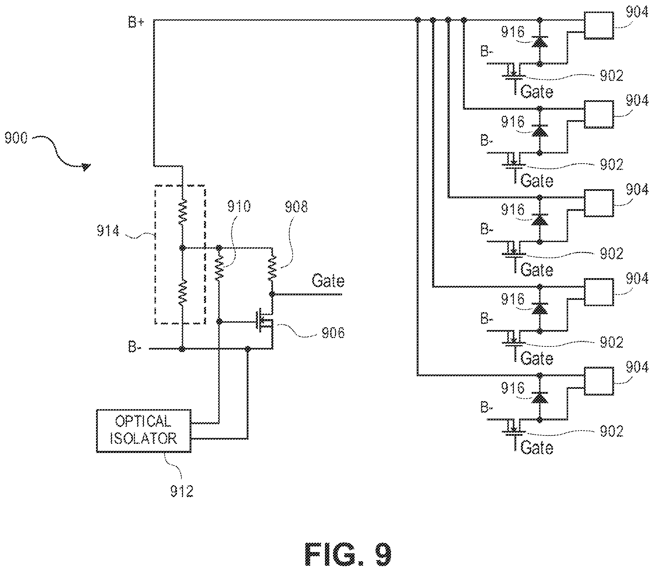

Referring to FIG. 9, in some implementations, the power distribution unit may include or be coupled with a protection circuit 900 that operates as both a spark suppression circuit to protect the UAV 100 when power is applied, and a shut-off or kill-switch circuit to shut down the UAV 100 by removing power. For example, the positive lead of the power supply(s) may be coupled to the protection circuit 900 and a positive node of each ESC component 904. The second or negative node of each ESC component 904 is coupled to the protection circuit 900 which controls power to the ESC components 904. Specifically, each second node of each ESC component 904 may be coupled to a respective drain of a transistor 902, such as a metal-oxide-semiconductor field-effect transistor (MOSFET) transistor, of the protection circuit 900. The source of each of the transistors 902 is coupled to ground and each gate of the transistors 902 is coupled to a drain of a transistor 906 and a resistor 908. The resistor 908 is used to control the time it takes for each of the transistors 902 to transition from an off state to an on state. The gate of transistor 906 is coupled to a second resistor 910 and an optical isolator 912. When the optical isolator is off, the transistor 910 pulls-up transistor 906 into an on state by drawing voltage from the voltage divider 914.

When the optical isolator is in an off state, the gate of transistor 906 is high (transistor 906 is on) which causes the transistors 902 to be in an off state and no power is applied to the ESCs. When the optical isolator 912 is activated, it causes the gate of transistor 906 to go low (transistor 904 is off), which, in turn, causes the gate node of each transistor 902 to charge through resistor 908 until the transistors 902 reach a threshold voltage for the transistor 902. By altering the size of the transistor 906 and/or the size of the resistor 908, the speed at which the transistors 902 transition from off, through their linear states and to their on states may be controlled, thereby providing spark suppression to protect the ESCs when power is first applied to the ESCs.

To control the timing of transition for transistors 902, the resistor 908 and resistor 910 must be sufficiently large (e.g., 100,000 - 500,000 ohms) so as not to affect the voltage divider 914. The resistor 910 is also larger than resistor 908. In one implementation, resistor 910 is three times as large as resistor 908. Likewise, the transistor 906 is generally smaller than transistors 902.

The protection circuit 900 also operates as a shut-off or kill switch circuit by quickly removing power from the ESCs. The kill switch may be used, for example, when an operator loses control of the UAV. To quickly remove power, the optical isolator 912 is shut off, which causes the gate on transistor 906 to go high. When the gate on transistor 906 goes high, the gates of transistors 902 go low and the transistors 902 shut off, thereby removing power from the ESCs 904. Likewise, a diode 916 may be coupled to the drain of each transistor 902 to receive current when power is removed, thereby protecting the transistors 902.

The protection circuit 900 is designed so that, comparatively, power is applied to the ESCs in a controlled manner, thereby providing spark suppression, but removed quickly, thereby providing a shut-off or kill switch circuit.

FIG. 5 depicts an underneath or bottom view of a frame 104 of a UAV 100, according to an implementation. As discussed above, the frame 104 may be formed of any suitable material, including but not limited to, carbon fiber, graphite, steel, machined aluminum, titanium, fiberglass and/or any other material or combination of materials. Likewise, the frame 104 may be machined to reduce the weight of the frame 104. For example, as illustrated in FIG. 5, the underneath side of the frame 104 may be machined into a hash pattern. The groves or open spaces 502 in the hash pattern may be formed of a size sufficient to position one or more components of the UAV and/or components of the UAV control system. For example, the electronic speed control (ESC) components 504-1, 504-2, 504-3, 504-4, 504-5 may be positioned in the open spaces 502 of the frame. In some implementations, the frame 104 may also operate as a heat sink to dissipate heat from the components mounted to the frame.

For example, components of the UAV control system 610, such as the ESC components 504 may be thermally coupled to the frame 104 using a thermal grease. The thermal grease, also known as thermal gel, thermal compound, thermal paste, heat paste, heat sink paste, heat transfer compound, heat transfer paste (HTP) or heat sink compound, is a viscous fluid substance which improves thermal transfer between the components and the frame 104. The thermal grease may comprise a ceramic, metal, carbon, graphite, liquid metal, phase change metal alloy (PCMA) and other similar materials. In other implementations thermally conductive pads may be used to provide thermal coupling between the frame 104 and the components. The frame 104 may also be used to dissipate heat from other components, such as the power supply.

FIG. 6 depicts a lifting motor 602 and a motor housing 106 of a UAV, according to an implementation. As discussed above, the motor housing 106 is mounted to the end of a motor arm 105 and houses a lifting motor 602. In some implementations, the lifting motor 602 and motor housing 106 may be secured to the motor arm using screws. For example, mounting screws for the lifting motor may be threaded through the motor housing, through the motor arm and into the lifting motor to secure each component together.

In one implementation, the lifting motors are mounted so that propeller shaft 604 of the lifting motor that mounts to the propeller 102 is facing downward with respect to the UAV. In other implementations, the lifting motor may be mounted with the propeller shaft 604 facing upwards with respect to the UAV. The lifting motors 602 may be any form of motor capable of generating enough rotational speed with the propellers to lift the UAV and any engaged payload, thereby enabling aerial transport of the payload. For example, the lifting motors 602 may each be a FX-4006-13 740kv multi-rotor motor, or a Tiger U-11 motor.

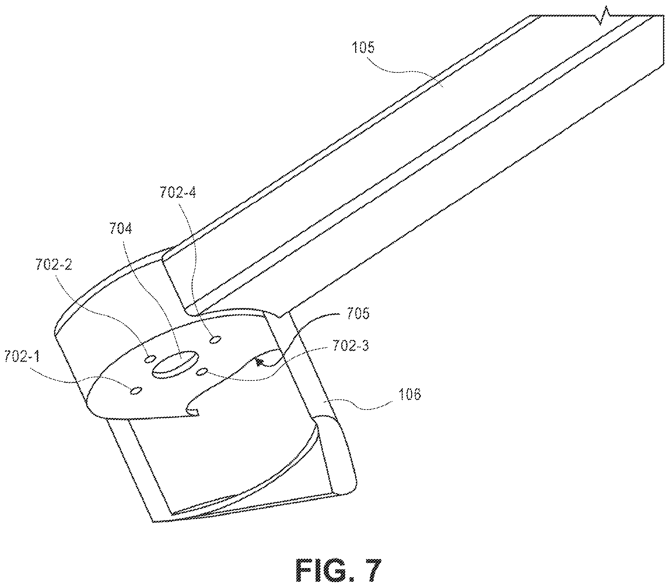

FIG. 7 depicts a lifting motor housing 106 of a UAV with the lifting motor removed, according to an implementation. As discussed above, the lifting motor housing 106 may be positioned on an end of the motor arm 105 and secured to the motor arm 105 using screws of the lifting motor. For example, four screws may be threaded through a top side (not shown) of the motor housing 106, through screw holes (not shown) in the motor arm 105 and through the lower screw holes 702-1, 702-2, 702-3, 702-4 of the lower side of the motor housing. The screws may then be screwed into the lifting motor to secure each of the components together. The wires of the lifting motor may be routed through the opening 704 in the motor housing 106 and through the internal cavity of the motor arm 105. Alternatively, the wires of the lifting motor may be routed through the opening 705 in the back of the motor housing 106 and through the internal cavity of the motor arm 105. In still another implementation, the wires may be affixed to an external portion of the motor arm 105.

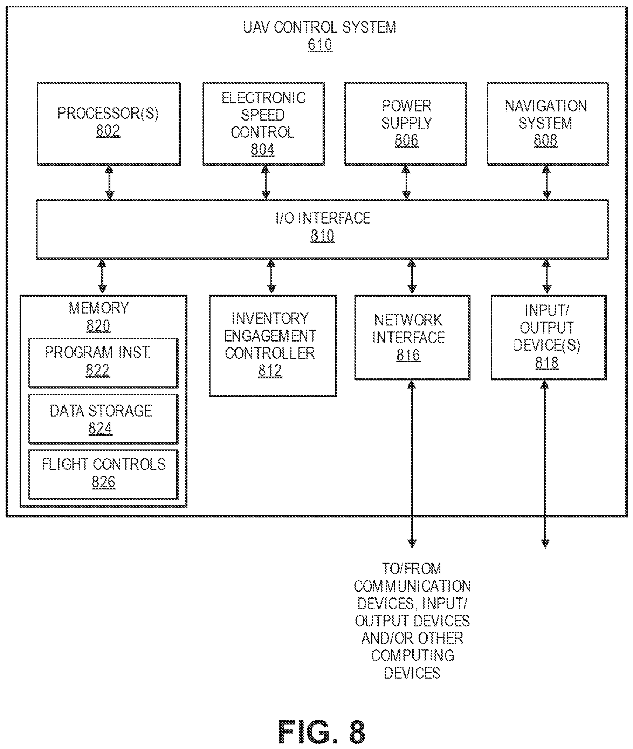

FIG. 8 is a block diagram illustrating an example UAV control system 610 of the UAV 100. In various examples, the block diagram may be illustrative of one or more aspects of the UAV control system 610 that may be used to implement the various systems and methods discussed herein and/or to control operation of the UAV 100. In the illustrated implementation, the UAV control system 610 includes one or more processors 802, coupled to a memory, e.g., a non-transitory computer readable storage medium 820, via an input/output (I/O) interface 810. The UAV control system 610 may also include electronic speed controls 804 (ESCs), power supply modules 806 and/or a navigation system 808. The UAV control system 610 further includes a payload engagement controller 812, a network interface 816, and one or more input/output devices 818.

In various implementations, the UAV control system 610 may be a uniprocessor system including one processor 802, or a multiprocessor system including several processors 802 (e.g., two, four, eight, or another suitable number). The processor(s) 802 may be any suitable processor capable of executing instructions. For example, in various implementations, the processor(s) 802 may be general-purpose or embedded processors implementing any of a variety of instruction set architectures (ISAs), such as the x86, PowerPC, SPARC, or MIPS ISAs, or any other suitable ISA. In multiprocessor systems, each processor(s) 802 may commonly, but not necessarily, implement the same ISA.

The non-transitory computer readable storage medium 820 may be configured to store executable instructions, data, flight paths, flight control parameters, component adjustment information, center of gravity information, and/or data items accessible by the processor(s) 802. In various implementations, the non-transitory computer readable storage medium 820 may be implemented using any suitable memory technology, such as static random access memory (SRAM), synchronous dynamic RAM (SDRAM), nonvolatile/Flash-type memory, or any other type of memory. In the illustrated implementation, program instructions and data implementing desired functions, such as those described herein, are shown stored within the non-transitory computer readable storage medium 820 as program instructions 822, data storage 824 and flight controls 826, respectively. In other implementations, program instructions, data and/or flight controls may be received, sent or stored upon different types of computer-accessible media, such as non-transitory media, or on similar media separate from the non-transitory computer readable storage medium 820 or the UAV control system 610. Generally speaking, a non-transitory, computer readable storage medium may include storage media or memory media such as magnetic or optical media, e.g., disk or CD/DVD-ROM, coupled to the UAV control system 610 via the I/O interface 810. Program instructions and data stored via a non-transitory computer readable medium may be transmitted by transmission media or signals such as electrical, electromagnetic, or digital signals, which may be conveyed via a communication medium such as a network and/or a wireless link, such as may be implemented via the network interface 816.

In one implementation, the I/O interface 810 may be configured to coordinate I/O traffic between the processor(s) 802, the non-transitory computer readable storage medium 820, and any peripheral devices, the network interface or other peripheral interfaces, such as input/output devices 818. In some implementations, the I/O interface 810 may perform any necessary protocol, timing or other data transformations to convert data signals from one component (e.g., non-transitory computer readable storage medium 820) into a format suitable for use by another component (e.g., processor(s) 802). In some implementations, the I/O interface 810 may include support for devices attached through various types of peripheral buses, such as a variant of the Peripheral Component Interconnect (PCI) bus standard or the Universal Serial Bus (USB) standard, for example. In some implementations, the function of the I/O interface 810 may be split into two or more separate components, such as a north bridge and a south bridge, for example. Also, in some implementations, some or all of the functionality of the I/O interface 810, such as an interface to the non-transitory computer readable storage medium 820, may be incorporated directly into the processor(s) 802.

The ESCs 804 communicate with the navigation system 808 and adjust the rotational speed of each lifting motor and/or the pushing motor to stabilize the UAV and guide the UAV along a determined flight path.

The navigation system 808 may include a global positioning system (GPS), indoor positioning system (IPS), or other similar system and/or sensors that can be used to navigate the UAV 100 to and/or from a location. The payload engagement controller 812 communicates with the actuator(s) or motor(s) (e.g., a servo motor) used to engage and/or disengage items.

The network interface 816 may be configured to allow data to be exchanged between the UAV control system 610, other devices attached to a network, such as other computer systems (e.g., remote computing resources), and/or with UAV control systems of other UAVs. For example, the network interface 816 may enable wireless communication between the UAV 100 and a UAV control system that is implemented on one or more remote computing resources. For wireless communication, an antenna of an UAV or other communication components may be utilized. As another example, the network interface 816 may enable wireless communication between numerous UAVs. In various implementations, the network interface 816 may support communication via wireless general data networks, such as a Wi-Fi network. For example, the network interface 816 may support communication via telecommunications networks, such as cellular communication networks, satellite networks, and the like.

Input/output devices 818 may, in some implementations, include one or more displays, imaging devices, thermal sensors, infrared sensors, time of flight sensors, accelerometers, pressure sensors, weather sensors, etc. Multiple input/output devices 818 may be present and controlled by the UAV control system 610. One or more of these sensors may be utilized to assist in landing as well as to avoid obstacles during flight.

As shown in FIG. 8, the memory may include program instructions 822, which may be configured to implement the example routines and/or sub-routines described herein. The data storage 824 may include various data stores for maintaining data items that may be provided for determining flight paths, landing, identifying locations for disengaging items, etc. In various implementations, the parameter values and other data illustrated herein as being included in one or more data stores may be combined with other information not described or may be partitioned differently into more, fewer, or different data structures. In some implementations, data stores may be physically located in one memory or may be distributed among two or more memories.

Those skilled in the art will appreciate that the UAV control system 610 is merely illustrative and is not intended to limit the scope of the present disclosure. In particular, the computing system and devices may include any combination of hardware or software that can perform the indicated functions. The UAV control system 610 may also be connected to other devices that are not illustrated, or instead may operate as a stand-alone system. In addition, the functionality provided by the illustrated components may, in some implementations, be combined in fewer components or distributed in additional components. Similarly, in some implementations, the functionality of some of the illustrated components may not be provided and/or other additional functionality may be available.

Those skilled in the art will also appreciate that, while various items are illustrated as being stored in memory or storage while being used, these items or portions of them may be transferred between memory and other storage devices for purposes of memory management and data integrity. Alternatively, in other implementations, some or all of the software components may execute in memory on another device and communicate with the illustrated UAV control system 610. Some or all of the system components or data structures may also be stored (e.g., as instructions or structured data) on a non-transitory, computer-accessible medium or a portable article to be read by an appropriate drive, various examples of which are described herein. In some implementations, instructions stored on a computer-accessible medium separate from the UAV control system 610 may be transmitted to the UAV control system 610 via transmission media or signals such as electrical, electromagnetic, or digital signals, conveyed via a communication medium such as a wireless link. Various implementations may further include receiving, sending or storing instructions and/or data implemented in accordance with the foregoing description upon a computer-accessible medium. Accordingly, the techniques described herein may be practiced with other UAV control system configurations.

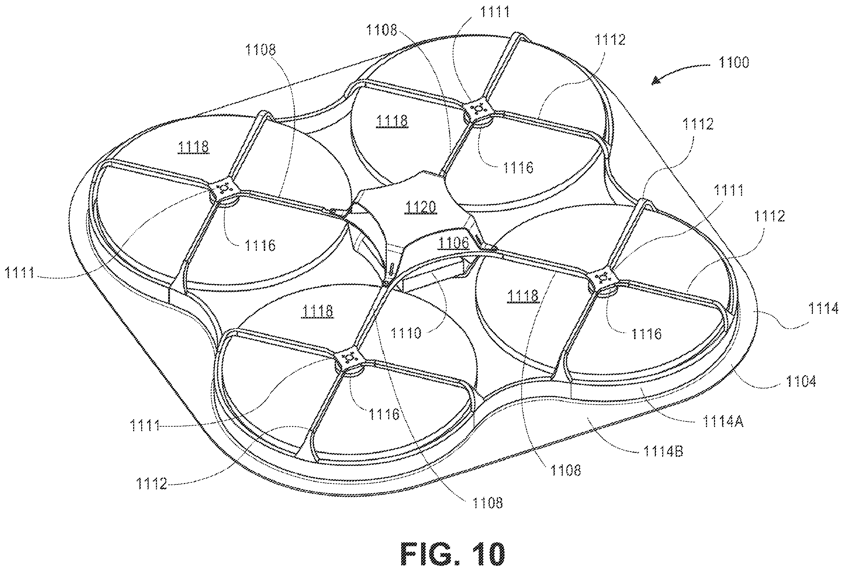

Additionally, turning now to Figures 10-16, the frame of a UAV 1100 is designed to encompass the lifting motors and corresponding lifting propellers to form a protective barrier around at least a perimeter of the lifting propellers. The frame includes a hub from which multiple motor arms extend. Each motor arm extends from the hub, over the top of a lifting propeller and lifting motor and couples with or otherwise terminates into a motor mount to which the corresponding lifting motor and lifting propeller are mounted. One or more support arms extends from each motor mount and couples with or otherwise terminates into a perimeter protective barrier that forms a perimeter of the frame and which extends around the perimeter of the lifting propellers. In some implementations, the frame may also include a permeable material (e.g., mesh, screen) that extends over the top and/or bottom of the frame to provide a protective barrier above and/or below the propellers of the UAV.

In some implementations, the frame may be formed of a single mold or uni-body design. In other implementations, one or more components of the frame may be coupled together. The frame is formed as two matching halves that are mounted or coupled together to form a single UAV frame for the UAV. To further improve the efficiency of the UAV, in some implementations, the frame (motor arms, motor mount, support arms, perimeter protection barrier) and/or other components of the UAV may be formed of one or more lightweight materials, such as carbon fiber, graphite, machined aluminum, titanium, fiberglass, etc. Regardless of the material, each of the motor arms, motor mounts, support arms, and/or perimeter protection barrier may be hollow or formed around a lightweight core (e.g., foam, wood, plastic), thereby reducing weight, increasing structural rigidity and providing a channel through which one or more wires and/or cables may be passed and/or in which other components may be housed. For example, the motor arms may include both an inner core (e.g., foam, wood, plastic) and a hollow portion. The inner core, which may be formed of foam, wood, plastic, etc., or any combination thereof, provides increased dimensionality to the motor arm and helps increase the structural integrity of the motor arm. The hollow portion, which may run along the top of the motor arm, provides a channel through which wires, such as motor control wires, may be passed.

In some implementations, the UAV may be configured so that the wires passing through the channels have multiple junctions to enable easy disassembly and/or part replacements. For example, the motor wires may be configured with multiple separable junctions. For example, the motor wires may extend from the motor and have a separable junction at or near the motor, rather than having only a single junction where the motor wires connect to the ESC. By having a separable junction for the motor wires near the motor, the motor can be easily removed and replaced without having to disassemble any other components of the UAV, access the UAV control system or remove the motor wires from the UAV.

FIG. 10 illustrates a view of a UAV 1100, according to an implementation. As illustrated, the UAV 1100 includes a frame 1104. The frame 1104 or body of the UAV 1100 may be formed of any suitable material, such as graphite, carbon fiber, aluminum, titanium, etc., or any combination thereof. In this example, the frame 1104 of the UAV 1100 is a single carbon fiber frame. The frame 1104 includes a hub 1106, motor arms 1108, motor mounts 1111, support arms 1112, and a perimeter protective barrier 1114. In this example, there is a single hub 1106, four motor arms 1108, four motor mounts 1111, twelve support arms 1112 and a single perimeter protective barrier 1114.

Each of the motor arms 1108 extend from the hub 1106 and couple with or terminate into the motor mounts 1111. Lifting motors 1116 are coupled to an inner side of the motor mount 1111 so that the lifting motor 1116 and corresponding lifting propeller 1118 are within the frame 1104. In one implementation, the lifting motors 1116 are mounted so that the propeller shaft of the lifting motor that mounts to the lifting propeller 1118 is facing downward with respect to the frame 1104. In other implementations, the lifting motors may be mounted at other angles with respect to the frame 1104 of the UAV 1100. The lifting motors may be any form of motor capable of generating enough rotational speed with the propellers to lift the UAV 1100 and any engaged payload, thereby enabling aerial transport of the payload. For example, the lifting motors may each be a FX-4006-13 740kv multi-rotor motor, a Tiger U-11 motor, a KDE motor, etc.

Mounted to each lifting motor 1116 is a lifting propeller 1118. The lifting propellers 1118 may be any form of propeller (e.g., graphite, carbon fiber) and of a size sufficient to lift the UAV 1100 and any payload engaged by the UAV 1100 so that the UAV 1100 can navigate through the air, for example, to deliver a payload to a delivery location. For example, the lifting propellers 1118 may each be carbon fiber propellers having a dimension or diameter of twenty-nine inches. While the illustration of FIG. 10 shows the lifting propellers 1118 all of a same size, in some implementations, one or more of the lifting propellers 1118 may be different sizes and/or dimensions. Likewise, while this example includes four lifting propellers, in other implementations, more or fewer propellers may be utilized as lifting propellers 1118. Likewise, in some implementations, the lifting propellers 1118 may be positioned at different locations on the UAV 1100. In addition, alternative methods of propulsion may be utilized as "motors" in implementations described herein. For example, fans, jets, turbojets, turbo fans, jet engines, internal combustion engines, and the like may be used (either with propellers or other devices) to provide lift for the UAV.

Extending from each motor mount 1111 are three support arms 1112 that couple with or otherwise terminate into the perimeter protective barrier 1114. The perimeter protective barrier 1114 extends around the perimeter of the UAV and encompasses the lifting propellers 1118. The perimeter protective barrier 1114 includes a vertical component 1114A that extends substantially downward from the support arms and approximately perpendicular to the axis of rotation of the lifting propellers 1118. The vertical component 1114A may be of any vertical dimension and width. For example, the vertical component 1114A may have a vertical dimension of approximately three inches and a width of approximately 0.5 inches. In other implementations, the vertical dimension and/or the width may be larger or smaller. Likewise, the vertical component 1114A of the perimeter protective barrier may include a core, such as a foam, wood and/or plastic core. The vertical component may be coupled to each of the support arms and extend around the outer perimeter of each propeller 1118 to inhibit access to the propellers from the sides of the UAV 1100.

The perimeter protective barrier 1114 provides safety for objects foreign to the UAV 1100 by inhibiting access to the propellers 1118 from the side of the UAV 1100 provides protection to the UAV 1100 and increases the structural integrity of the UAV 1100. For example, if the UAV 1100 is traveling horizontally and collides with a foreign object (e.g., wall, building), the impact between the UAV and the foreign object will be with the perimeter protective barrier 1114, rather than a propeller. Likewise, because the frame is interconnected, the forces from the impact are dissipated across the frame.

Likewise, the vertical component 1114A provides a surface upon which one or more components of the UAV may be mounted. For example, one or more antennas may be mounted to the vertical component 1114A of the perimeter protective barrier 1114. The antennas may be used to transmit and/or receive wireless communications. For example, the antennas may be utilized for Wi-Fi, satellite, near field communication ("NFC"), cellular communication, or any other form of wireless communication. Other components, such as cameras, time of flight sensors, distance determining elements, gimbals, Global Positioning System (GPS) receiver/transmitter, radars, illumination elements, speakers, and/or any other component of the UAV 1100 or the UAV control system (discussed below), etc., may likewise be mounted to the vertical component 1114A of the perimeter protective barrier 1114. Likewise, identification or reflective identifiers may be mounted to the vertical component to aid in the identification of the UAV 1100.

The perimeter protective barrier 1114 includes a horizontal component 1114B that extends outward, with respect to the UAV 1100, from the vertical component 1114A of the perimeter protective barrier 1114. The horizontal component 1114B may provide additional protective support for the UAV and/or any object with which the UAV 1100 may come into contact. Similar to the vertical component 1114A, the horizontal component 1114B may or may not include a core. Likewise, the horizontal component 1114B provides another surface to which one or more components (e.g., antennas, camera, sensors, GPS, range finders) may be mounted.

The perimeter protective barrier may be angled (e.g., forty-five degree angle) with respect to the UAV 1100, and extend from above the lifting propellers where it is coupled with the support arms 1112 to below the lifting propellers 1118. Such a configuration may improve the aerodynamics of the UAV 1100. In other implementations, the perimeter protective barrier may have other configurations or designs.

In addition to providing protection for the UAV 1100, the frame 1104 provides structural support for the UAV 1100. By interconnecting all of the components, hub 1106, motor arms 1108, motor mounts 1111, support arms 1112, and perimeter protective barrier 1114, the resulting frame has structural stability and is sufficient to support the lifting motors, lifting propellers, a payload (e.g., container), UAV control system and/or other components of the UAV.

In some implementations, the frame 1104 may also include a permeable material (e.g., mesh, screen) that extends over the top and/or lower surface of the frame to inhibit vertical access to the propellers from above or below the propellers 1118. Likewise, in some implementations, one or more mounting plates 1120 may be affixed to the frame 1104 to provide additional surface area for mounting components to the UAV 1100. The mounting plates 1120 may be removably coupled to the frame 1104, for example, using screws, fasteners, etc. Alternatively, the mounting plates 1120 may be formed as part of the frame 1104.

A UAV control system 1110 is also mounted to the frame 1104. In this example, the UAV control system 1110 is mounted between the hub 1106 and a mounting plate 1120. The UAV control system 1110, as discussed in further detail above (as item 610 of Figure 8), controls the operation, routing, navigation, communication, motor controls, and the payload engagement mechanism of the UAV 1100.

Likewise, the UAV 1100 includes one or more power modules (not shown). The power modules may be mounted to various locations on the frame. For example, in some implementations, four power modules may be mounted to each mounting plate 1120 and/or to the hub 1106 of the frame. The power module for the UAV may be in the form of battery power, solar power, gas power, super capacitor, fuel cell, alternative power generation source, or a combination thereof. For example, the power modules may each be a 6000mAh lithium-ion polymer battery, or polymer lithium ion (Li-poly, Li-Pol, LiPo, LIP, PLI or Lip) battery. The power module(s) are coupled to and provide power for the UAV control system 1110, the lifting motors 1116 and the payload engagement mechanism.

In some implementations, one or more of the power modules may be configured such that it can be autonomously removed and/or replaced with another power module while the UAV is landed or in flight. For example, when the UAV lands at a location, the UAV may engage with a charging member at the location that will recharge the power module.

As mentioned above, the UAV 1100 may also include a payload engagement mechanism (not shown). The payload engagement mechanism may be configured to engage and disengage items and/or containers that hold items. In this example, the payload engagement mechanism is positioned beneath and coupled to the hub 1106 of the frame 1104 of the UAV 1100. The payload engagement mechanism may be of any size sufficient to securely engage and disengage containers that contain items. In other implementations, the payload engagement mechanism may operate as the container, in which it contains item(s). The payload engagement mechanism communicates with (via wired or wireless communication) and is controlled by the UAV control system 1110.

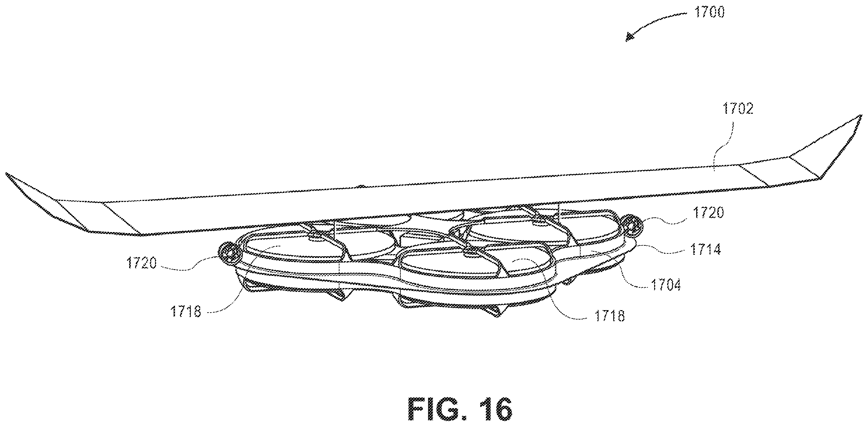

While the implementations of the UAV 1100 discussed herein utilize propellers to achieve and maintain flight, in other implementations, the UAV may be configured in other manners. For example, the UAV may include fixed wings and/or a combination of both propellers and fixed wings. For example, as discussed below with respect to FIG. 16, the UAV may utilize one or more propellers and motors to enable vertical takeoff and landing and a fixed wing configuration or a combination wing and propeller configuration to sustain flight while the UAV is airborne.

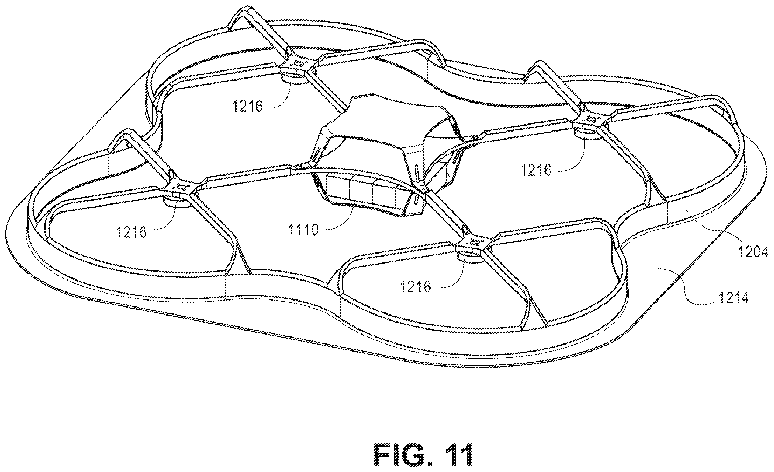

FIG. 11 is another view of the UAV frame 1204, according to an implementation. In this illustration, the propellers have been removed to further illustrate the frame 1204. As shown, the frame may be a unit to which components of the UAV are mounted. For example, the motors 1216 are mounted to the frame and the UAV control system 1110 is mounted to the frame 1204. The frame is designed to encompass the components of the UAV 1100 and provide a protective barrier around the UAV. The lifting propellers (not shown) mount to the lifting motors 1216 and fit within the perimeter protective barrier 1214.

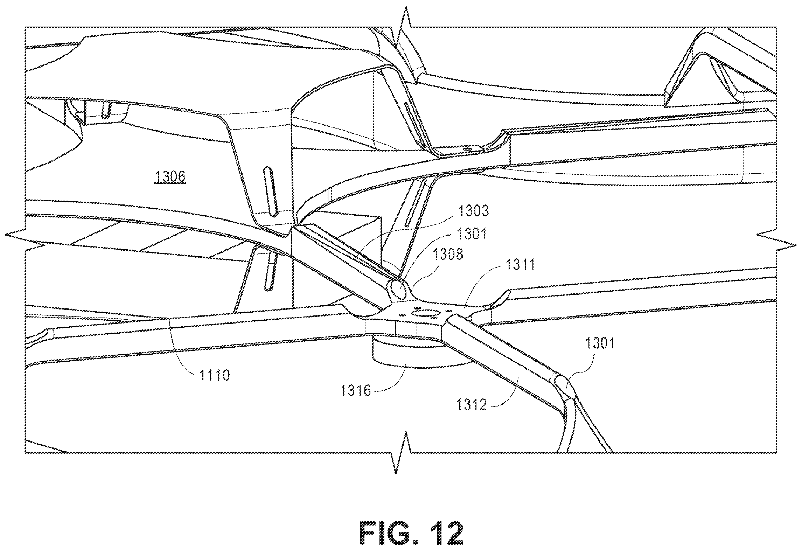

FIG. 12 depicts another view of a UAV frame, according to an implementation. The illustration in FIG. 12 provides a detailed view of a motor arm 1308. The motor arm 1308 is coupled at one end to the hub 1306 of the UAV and the opposing end of the motor arm 1308 is coupled to the motor mount 1311. In this implementation, the motor arm includes a channel 1301 through which one or more wires or conduits carrying electrical, optical, hydraulic, pneumatic, or mechanical signals may pass. The channel 1301 may be formed as part of the frame of the UAV or may be coupled to the motor arm 1308. Likewise, the channel 1301 may include a slit 1303 or opening to aid in the insertion or removal of wires from the channel 1301. For example, the motor wires that pass from the motor 1316 to the UAV control system 1110 may be passed through the channel 1301 so that the wires remain secured to the UAV.

While the example of FIG. 12 describes the channel 1301 as part of or mounted to the top or upper side of the motor arm 1308, in other implementations the channel may be mounted to other surfaces (e.g., sides) of the motor arm 1308. Likewise, in some implementations, there may be multiple channels attached to one or more of the motor arms 1308. In still other implementations, channels 1301 may likewise be coupled to one or more of the support arms 1312. For example, wires from one or more components coupled to the perimeter protective barrier (not shown in FIG. 12) may be passed through the channel 1301 of the support arm 1312 and the channel 1301 of the motor arm 1308 so that the wires remain secured to the UAV. Additionally, in yet another alternative implementation, one or more channels 1301 may pass through motor arms 1308.

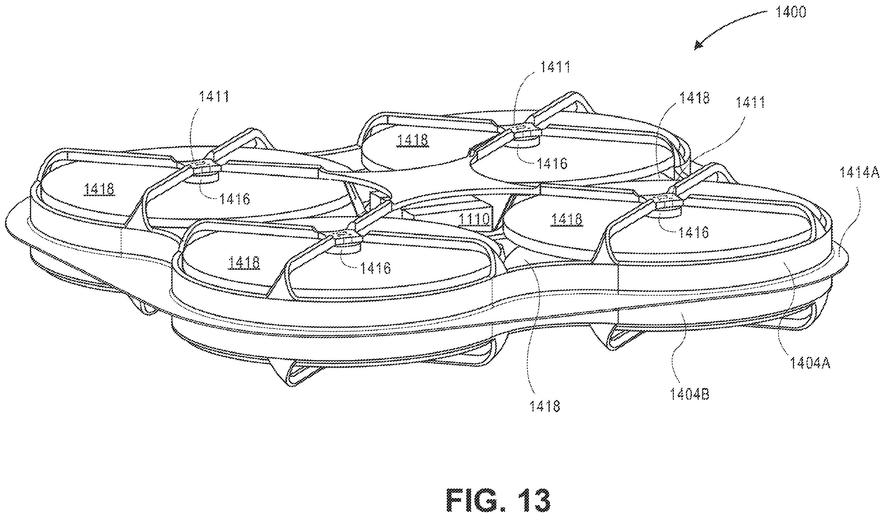

FIG. 13 depicts a view of another UAV configuration, according to an embodiment of the present invention. The UAV 1400 illustrated in FIG. 13 includes eight lifting motors 1416 and corresponding lifting propellers 1418. In this configuration, the UAV 1400 is formed of two matching frames 1404A, 1404B that are coupled together in a stacked or clamshell configuration. In this embodiment, each frame is a single carbon fiber frame that is removably coupled together by joining the horizontal components 1414A of the perimeter protective barriers of the frames 1404. For example, the frames may be screwed, bolted, riveted, welded, fused or otherwise fastened together.

The frames 1404A and 1404B may have the same or similar components and/or configuration to the frame 1104 discussed above with respect to FIG. 10. For example, each frame 1404 includes a hub, motor arms, motor mounts, support arms, and a perimeter protective barrier. Each frame 1404 has four lifting motors 1416 and corresponding lifting propellers 1418 mounted to respective motor mounts 1411 of the frame 1404. Likewise, the UAV control system 1110 may be mounted to one or more of the frames 1404 and one or more components (e.g., antenna, camera, gimbal, radar, distance determining elements) may be mounted to one or more of the frames, as discussed above. However, in the illustrated UAV 1400, one UAV control system 1110 may be configured to control the UAV 1400 and each of the eight lifting motors 1416 and corresponding lifting propellers.

By coupling the frames 1404 together, all of the motors and propellers of the UAV 1400 are surrounded by the frame 1404. Likewise, in some embodiments, the frame 1404 may include a permeable material (e.g., wire, mesh) that surrounds the outer perimeter formed by the frame 1404 to inhibit access to the propellers 1418 from above or below the UAV 1400.

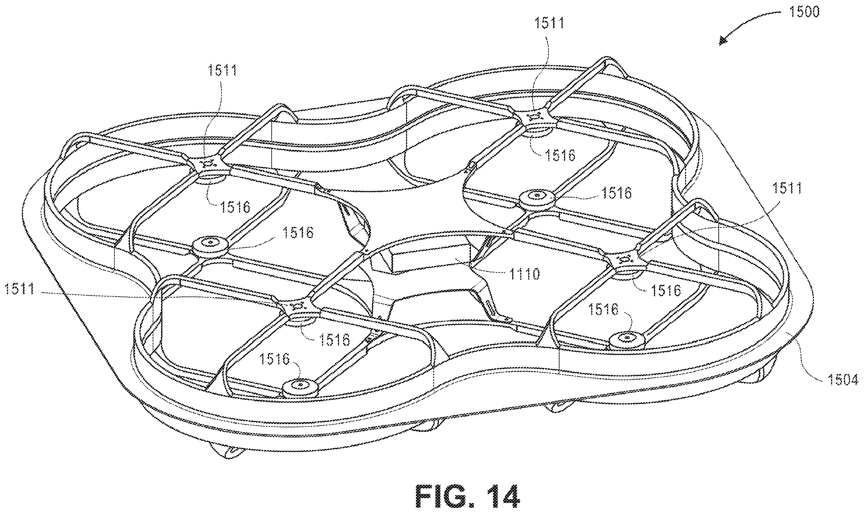

FIG. 14 depicts a view of another UAV 1500 frame 1504, to be used for an embodiment of the invention. In this illustration, the propellers have been removed to further illustrate the frame 1504. As shown, the frame 1504 is formed using two matching frames that are mounted or joined together so that the lifting motors and lifting propellers are within the frame 1504 of the UAV 1500. As discussed above, the frame 1504 provides both a protective barrier and structural support for mounting of UAV 1500 components. For example, the lifting motors 1516 are mounted to the inner portions of the motor mounts 1511 of the frame 1504 and the UAV control system 1110 is mounted to the frame 1504. The frame is designed to encompass the components of the UAV 1500 and provide a protective barrier around the UAV 1500. The lifting propellers (not shown) mount to the lifting motors 1516 and fit within the frame 1504.

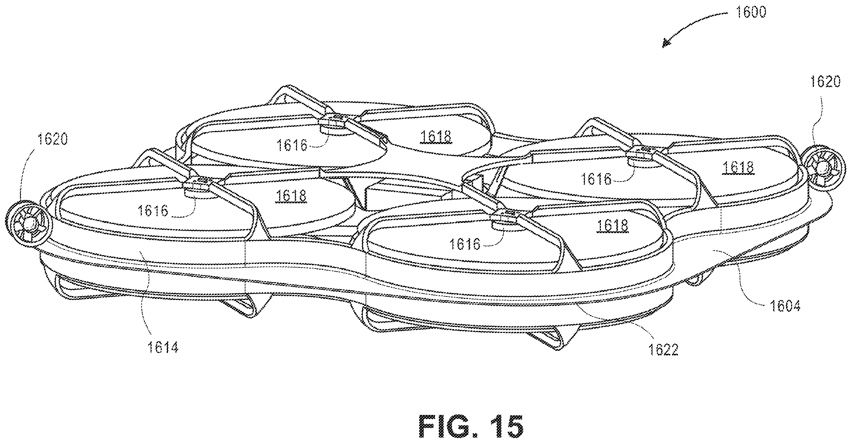

FIG. 15 depicts a view of another UAV 1600 configuration, according to an embodiment of the invention. The UAV 1600 is similar to the eight-propeller UAVs 1400, 1500 discussed above with respect to FIGs. 13 and 14. For example, in this illustration, the UAV 1600 includes a frame 1604 to which eight lifting motors 1616 and corresponding lifting propellers 1618 are mounted. Likewise, the frame 1604 provides a protective barrier around each of the lifting motors 1616, lifting propellers 1618 and other components of the UAV 1600.

In addition to the lifting motors 1616 and lifting propellers 1618, the UAV 1600 includes two pushing motor housings 1620, each of which include a pushing motor and pushing propeller. The pushing motor housings 1620 are mounted to the perimeter protective barrier 1614 of the frame 1604. The pushing motor housing 1620 may be aerodynamically shaped and configured to encase the pushing motor and/or pushing propeller. The pushing motor and the pushing propeller may be the same or different than the lifting motors 1616 and lifting propellers 1618. For example, in some implementations, the pushing motor may be a Tiger U-8 motor and the pushing propeller may have a dimension of eighteen inches. In other implementations, the pushing motor and pushing propeller may be formed with the pushing motor housing 1620 as a single unit, such as a ducted fan system. In some implementations, the pushing propeller may have a smaller dimension than the lifting propellers. In other implementations, the pushing motors may utilize other forms of propulsion to propel the UAV. For example, fans, jets, turbojets, turbo fans, jet engines, internal combustion engines, and the like may be used (either with propellers or other devices) as the pushing motors.

The pushing motors and pushing propellers may be oriented at approximately ninety degrees with respect to the frame 1604 of the UAV 1600 and utilized to increase the efficiency of flight that includes a horizontal component. For example, when the UAV 1600 is traveling in a direction that includes a horizontal component, the pushing motors may be engaged to provide horizontal thrust force via the pushing propellers to propel the UAV 1600 horizontally. As a result, the speed and power utilized by the lifting motors 1616 may be reduced. Alternatively, in selected implementations, the pushing motor may be oriented at an angle greater or less than ninety degrees with respect to the frame 1604 to provide a combination of pushing and lifting thrust.

Utilizing two pushing motors and pushing propellers mounted on opposite sides of the UAV 1600, as illustrated in FIG. 15, the UAV has an orientation during horizontal flight. Specifically, the UAV 1600, when propelled horizontally using the pushing motors and propellers alone or in combination with the lifting motors 1616 and lifting propellers 1618, will orient and travel with the leading edge 1622 oriented in the direction of travel. Additionally, utilizing two pushing motors as shown in FIG. 15, rotation of the UAV 1600 in the horizontal plane (i.e., yaw) may be adjusted by providing a thrust differential between the two pushing motors. In some embodiments of the invention, an airfoil or wing may likewise be mounted to the UAV 1600 in accordance with the direction of travel to provide additional lift and increased efficiency to the UAV 1600.

While the example discussed herein with respect to FIG. 15 illustrates a UAV with eight lifting motors and corresponding lifting propellers being used with two pushing motors and corresponding pushing propellers, in other implementations not falling within the scope of the claims, fewer or additional lifting motors and corresponding lifting propellers may be used in conjunction with one or more pushing motors and pushing propellers. For example, one or more pushing motors and corresponding pushing propellers may be mounted to a UAV that includes four lifting motors and corresponding lifting propellers, such as the UAV 1100 discussed above with respect to FIG. 10. In other implementations, more or fewer pushing motors and/or pushing propellers may be utilized.

FIG. 16 depicts another view of a UAV 1700, according to an embodiment of the invention. In the example illustrated in FIG. 16, the UAV 1700 includes a wing 1702 coupled to the frame 1704 of the UAV 1700. The wing 1702 may be formed of any suitable material such as, but not limited to, carbon fiber, aluminum, fabric, plastic, fiberglass, wood, etc. The wing 1702 may be coupled to the top of the frame 1704 and positioned above the pushing motor housings 1720 that include the pushing motors and pushing propellers.

The wing is designed to have an airfoil shape to provide lift to the UAV 1700 as the UAV 1700 moves horizontally. In some embodiments of the invention, utilizing the pushing motors and the pushing propellers in conjunction with the wing 1702, when the UAV 1700 is moving in a direction that includes a horizontal component, the rotational speed of the lifting motors and lifting propellers 1718 may be reduced or eliminated as the wing 1702 may provide lift and keep the UAV 1700 airborne when thrust in a horizontal direction by the pushing motors and pushing propellers is applied. In implementations where the wing 1702 includes flaps and/or ailerons, the pitch, yaw and roll of the UAV 1700 may be controlled using the flaps and/or ailerons alone or in combination with the lifting motors and lifting propellers 1718 and/or the pushing motors and pushing propellers. If the wing 1702 does not include flaps and/or ailerons, the lifting motors and lifting propellers 1718 and/or the pushing motors and pushing propellers may be utilized to control the pitch, yaw, and/or roll of the UAV 1700 during flight. In some implementations, the wing 1702 may be configured to rotate or pivot about the frame 1704 of the UAV 1700 to reduce drag when the UAV 1700 is moving in a direction that includes a vertical component.

The UAV 1700 may be configured with eight lifting propellers and one or more pushing motors and pushing propellers, as shown, or may have a different configuration, which consequently may not necessarily be covered by the scope of the claims. In another configuration, the wing may be mounted to a UAV that includes eight lifting motors and corresponding lifting propellers but no pushing motors or pushing propellers. In another example, the UAV 1700 may include a wing 1702 mounted to a UAV with four lifting propellers and motors, such as the UAVs 1100, 1200 discussed above with respect to FIGs. 10 and 11. In still another example, the UAV may have four lifting motors and propellers and one or more pushing motors and pushing propellers, in conjunction with a wing 1702.

Still further, while the UAV 1700 illustrates a single wing extending across the top of the UAV 1700, in other implementations, additional wings and/or different configurations of wings may be utilized. For example, in one implementation, a wing may extent horizontally from the perimeter protective barrier 1714 on either side of the UAV 1700. In another implementation, a front wing may extend from either side of the front of the perimeter protective barrier 1714 and a larger rear wing may extend from either side of the rear of the perimeter protective barrier 1714.

Although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. An unmanned aerial vehicle (UAV) (1400, 1500, 1600, 1700) comprising:
a frame (1404, 1504, 1604,1704) comprising:
a first uni-body frame (1404A) comprising a hub, four motor arms extending from the hub, four motor mounts (1411, 1511), each on a respective motor arm, and three support arms extending between each motor mount and a perimeter protective barrier (1414, 1514, 1614, 1714), the perimeter protective barrier forming a perimeter of the frame and comprising a vertical component, the vertical component extending substantially downward from the support arms, and a horizontal component that extends outward, with respect to the hub, from the vertical component; and
a second, matching, uni-body frame (1404B) stacked on and coupled to the first uni-body frame;
four motors (1416,1516,1616) each mounted to an inner side of a respective motor mount (1411, 1511) of the first uni-body frame;
four motors (1416, 1516, 1616) each mounted to an inner side of a respective motor mount of the second uni-body frame; and
a plurality of propellers (1418, 1518, 1618, 1718), each propeller coupled to a motor of the motors (1416, 1516, 1616), wherein the vertical component extends approximately perpendicular to an axis of rotation of the propellers (1418, 1518, 1618, 1718), wherein the perimeter protective barrier (1414, 1514, 1614, 1714) of each uni-body frame extends around the perimeter of the propellers, wherein the motor arms and support arms of each uni-body frame are on an outer side of their respective motors so that each motor and corresponding propeller is within the frame, and wherein the perimeter protective barrier of the first uni-body frame and the perimeter protective barrier of the second uni-body frame are joined around their respective horizontal components such that the horizontal component of the perimeter protective barrier of the first uni-body frame and the horizontal component of the perimeter protective barrier of the second uni-body frame are in contact with one another along their complete circumference.

2. The UAV of claim 1, wherein the first and second uni-body frames each further comprise:
a channel coupled to a first motor arm of the motor arms and configured to receive a wire.

3. The UAV of claim 2, wherein the channel is formed as part of the first motor arm.

4. The UAV of any of claims 1, 2, or 3, wherein two pushing motor housings (1620), each including a pushing motor and a pushing propeller, are provided on the perimeter barrier (1614) and positioned to provide horizontal thrust to the UAV.

5. The UAV of claim 1, further comprising:
a mesh or screen extending around at least a portion of the frame.

6. The UAV of claim 1, further comprising:
a wing (1702) coupled to the frame (1704), wherein the wing is configured to provide lift as the UAV is flown in a direction including a horizontal component.

7. The UAV of claim 1, further comprising:
at least one of an antenna, a camera, a time of flight sensor, a distance determining element, a gimbal, a Global Positioning System (GPS) receiver/transmitter, a radar, an illumination element, or a speaker coupled to the perimeter protective barrier.

8. The UAV of claim 1, further comprising:
a payload engagement mechanism coupled to the frame and configured to engage or disengage a payload.

## Patentansprüche

1. Unbemanntes Luftfahrzeug (UAV) (1400, 1500, 1600, 1700), umfassend:
einen Rahmen (1404, 1504, 1604 1704), umfassend:
einen ersten selbsttragenden Rahmen (1404A), der eine Nabe, vier sich von der Nabe erstreckende Motorarme, vier Motorhalterungen (1411, 1511), jeweils an einem jeweiligen Motorarm, und drei Stützarme, die sich zwischen jeder Motorhalterung und einer Randschutzbarriere (1414, 1514, 1614, 1714) erstrecken, umfasst, wobei die Randschutzbarriere einen Rand des Rahmens bildet und eine vertikale Komponente, wobei sich die vertikale Komponente im Wesentlichen von den Stützarmen nach unten erstreckt, und eine horizontale Komponente, die sich in Bezug auf die Nabe von der vertikalen Komponente nach außen erstreckt, umfasst; und
einen zweiten, übereinstimmenden selbsttragenden Rahmen (1404B), der auf den ersten selbsttragenden Rahmen gestapelt und damit gekoppelt ist;
vier Motoren (1416, 1516, 1616), die jeweils an einer Innenseite einer jeweiligen Motorhalterung (1411, 1511) des ersten selbsttragenden Rahmens montiert sind;
vier Motoren (1416, 1516, 1616), die jeweils an einer Innenseite einer jeweiligen Motorhalterung des zweiten selbsttragenden Rahmens montiert sind; und
eine Mehrzahl von Propellern (1418, 1518, 1618, 1718), wobei jeder Propeller mit einem Motor der Motoren (1416, 1516, 1616) gekoppelt ist, wobei sich die vertikale Komponente annähernd senkrecht zu einer Drehachse der Propeller (1418, 1518, 1618, 1718) erstreckt, wobei sich die Randschutzbarriere (1414, 1514, 1614, 1714) jedes selbsttragenden Rahmens um den Rand der Propeller erstreckt, wobei sich die Motorarme und Stützarme jedes selbsttragenden Rahmens auf einer Außenseite ihrer jeweiligen Motoren befinden, so dass sich jeder Motor und zugehörige Propeller innerhalb des Rahmens befindet, und wobei die Randschutzbarriere des ersten selbsttragenden Rahmens und die Randschutzbarriere des zweiten selbsttragenden Rahmens um ihre jeweiligen horizontalen Komponenten herum derart aneinandergefügt sind, dass die horizontale Komponente der Randschutzbarriere des ersten selbsttragenden Rahmens und die horizontale Komponente der Randschutzbarriere des zweiten selbsttragenden Rahmens entlang ihres gesamten Umfangs in Kontakt miteinander sind.

2. UAV nach Anspruch 1, wobei die ersten und zweiten selbsttragenden Rahmen jeweils ferner Folgendes umfassen:
einen Kanal, der mit einem ersten Motorarm der Motorarme gekoppelt und dazu ausgelegt ist, einen Draht aufzunehmen.

3. UAV nach Anspruch 2, wobei der Kanal als Teil des ersten Motorarms ausgebildet ist.

4. UAV nach einem der Ansprüche 1, 2 oder 3, wobei zwei Schubmotorgehäuse (1620), die jeweils einen Schubmotor und einen Schubpropeller umfassen, an der Randbarriere (1614) bereitgestellt und so positioniert sind, dass sie eine horizontale Schubkraft auf das UAV bereitstellen.

5. UAV nach Anspruch 1, ferner umfassend:
ein Gitter oder eine Blende, das bzw. die sich um zumindest einen Abschnitt des Rahmens herum erstreckt.

6. UAV nach Anspruch 1, ferner umfassend:
einen Flügel (1702), der mit dem Rahmen (1704) gekoppelt ist, wobei der Flügel dazu ausgelegt ist, Auftrieb bereitzustellen, während das UAV in eine Richtung geflogen wird, umfassend eine horizontale Komponente.

7. UAV nach Anspruch 1, ferner umfassend:
mindestens eines einer Antenne, einer Kamera, eines Laufzeitsensors, eines Distanzbestimmungselements, eines Kardanrahmens, eines Global-Positioning-System(GPS)-Empfängers/-Senders, eines Radars, eines Beleuchtungselements oder eins mit der Randschutzbarriere gekoppelten Lautsprechers.

8. UAV nach Anspruch 1, ferner umfassend:
einen Nutzlasteingriffsmechanismus, der mit dem Rahmen gekoppelt und dazu ausgelegt ist, eine Nutzlast in Eingriff zu bringen oder zu lösen.

## Revendications

1. Véhicule aérien sans pilote (UAV) (1400, 1500, 1600, 1700), comprenant :
un châssis (1404, 1504, 1604, 1704) comprenant :
un premier châssis monocoque (1404A) comprenant un moyeu, quatre bras de moteur s'étendant depuis le moyeu, quatre fixations de moteur (1411, 1511) chacune sur un bras de moteur respectif, et trois bras de support s'étendant entre chaque fixation de moteur et une barrière de protection périmétrique (1414, 1514, 1614, 1714), la barrière de protection périmétrique formant un périmètre du châssis et comprenant un composant vertical, le composant vertical s'étendant sensiblement vers le bas depuis les bras de support, et un composant horizontal qui s'étend vers l'extérieur, par rapport au moyeu, depuis le composant vertical ; et
un deuxième châssis monocoque complémentaire (1404B) empilé sur le premier châssis monocoque et accouplé à lui ;
quatre moteurs (1416, 1516, 1616), chacun étant monté sur un côté intérieur d'une fixation de moteur (1411, 1511) respective du premier châssis monocoque ;
quatre moteurs (1416, 1516, 1616), chacun étant monté sur un côté intérieur d'une fixation de moteur respective du deuxième châssis monocoque ; et
une pluralité d'hélices (1418, 1518, 1618, 1718), chaque hélice étant accouplée à un moteur des moteurs (1416, 1516, 1616), le composant vertical s'étendant à peu près perpendiculairement à un axe de rotation des hélices (1418, 1518, 1618, 1718),
la barrière de protection périmétrique (1414, 1514, 1614, 1714) de chaque châssis monocoque s'étendant autour du périmètre des hélices, les bras de moteur et les bras de support de chaque châssis monocoque se situant sur un côté extérieur de leurs moteurs respectifs de façon à ce que chaque moteur et l'hélice correspondante se situent à l'intérieur du châssis, et la barrière de protection périmétrique du premier châssis monocoque et la barrière de protection périmétrique du deuxième châssis monocoque étant rendues solidaires autour de leurs composants horizontaux respectifs de façon à ce que le composant horizontal de la barrière de protection périmétrique du premier châssis monocoque et le composant horizontal de la barrière de protection périmétrique du deuxième châssis monocoque soient au contact l'un de l'autre le long de toute leur circonférence.

2. UAV selon la revendication 1, dans lequel les premier et deuxième châssis monocoques comprennent en outre chacun :
un canal accouplé au premier bras de moteur des bras de moteur et configuré pour recevoir un fil.

3. UAV selon la revendication 2, dans lequel le canal fait partie intégrante du premier bras de moteur.

4. UAV selon l'une quelconque des revendications 1, 2 ou 3, dans lequel deux carters (1620) de moteur de poussée, chacun comportant un moteur de poussée et une hélice de poussée, sont agencés sur la barrière périmétrique (1614) et positionnés de manière à fournir une poussée horizontale à l'UAV.

5. UAV selon la revendication 1, comprenant en outre :
une maille ou un treillis s'étendant autour d'une partie au moins du châssis.

6. UAV selon la revendication 1, comprenant en outre :
une aile (1702) accouplée au châssis (1704), l'aile étant configurée pour fournir une portance lors du vol de l'UAV dans une direction comportant une composante horizontale.

7. UAV selon la revendication 1, comprenant en outre :
au moins un élément parmi une antenne, une caméra, un capteur à temps de vol, un élément de détermination de distance, un cardan, un émetteur/récepteur de système mondial de localisation (GPS), un radar, un élément d'éclairage ou un haut-parleur, couplé à la barrière de protection périmétrique.

8. UAV selon la revendication 1, comprenant en outre :
un mécanisme de prise de charge utile accouplé au châssis et configuré pour prendre ou relâcher une charge utile.
